# EUROPÄISCHE PATENTSCHRIFT

(11) **EP 0 984 754 B1**
(45) Veröffentlichungstag und Bekanntmachung des Hinweises auf die Patenterteilung: **26.11.2003**
(21) Anmeldenummer: 98933453.7
(22) Anmeldetag: 30.04.1998
(51) Int. Cl.: A61F 9/08

(54) **ORIENTIERUNGSHILFE FÜR BLINDE UND SEHBEHINDERTE**
ORIENTATION AID FOR THE BLIND AND THE VISUALLY DISABLED
AUXILIAIRE D'ORIENTATION POUR MALVOYANTS

(30) Priorität: 30.04.1997 DE 29708128 U; 09.01.1998 DE 29800598 U
(43) Veröffentlichungstag der Anmeldung: 15.03.2000
(73) Patentinhaber: Ritz, Maria, 10997 Berlin (DE); König, Lutz, 13469 Berlin (DE); Wöste, Ludger, 14109 Berlin (DE)
(72) Erfinder: Ritz, Maria, 10997 Berlin (DE); König, Lutz, 13469 Berlin (DE); Wöste, Ludger, 14109 Berlin (DE)
(74) Vertreter: Weisse, Jürgen, Dipl.-Phys.
(86) Internationale Anmeldenummer: DE9801249
(87) Internationale Veröffentlichungsnummer: WO98048749

(56) Entgegenhaltungen:
- WO-A1-95/21595
- DE-A1- 2 330 940
- DE-A1- 3 907 907
- DE-A1- 4 402 764

## Beschreibung

### Technisches Gebiet

Die Erfindung betrifft ein Gerät zur Orientierungshilfe für Blinde und Sehbehinderte, enthaltend
(a) mindestens ein berührungsloses Entfernungsmeßsystem, welches eine von der Entfernung zwischen dem Gerät und einem von dem Entfernungsmeßsystem erfaßten Gegenstand abhängige Stellgröße erzeugt, und
(b) mindestens eine Anzeigevorrichtung,
   (b₁) welche von der Stellgröße des Entfernungsmeßsystems beaufschlagt wird,
   (b₂) eine von der Stellgröße abhängige Anzeige liefert, und
   (b₃) mindestens eine Fühlanzeige aufweist, welche sich längs einer Abtaststrecke als monotone Funktion der durch das Entfernungsmeßsystem gemessenen Entfernung verlagert,

### Zugrundeliegender Stand der Technik

Blinde oder stark sehbehinderte Personen orientieren sich in ihrer Umgebung in der Regel mit einem Blindenstock, mit welchem Gegenstände in einem Abstand von ca. 1,2 m ertastbar sind. Die Orientierung mittels eines solchen Blindenstock weist mehrere Nachteile auf. Insbesondere ist die Entfernung der abtastbaren Gegenstände klein.

Es sind eine Mehrzahl von Geräten zur Orientierungshilfe für Blinde und Sehbehinderte bekannt, welche durch Verwendung von berührungslosen Entfernungsmeßsystemen die Nachteile des Blindenstocks beheben sollen. Solche berührungslosen Entfernungsmeßsysteme sind in verschiedenen Ausführungen bekannt. Dabei wird ein Meßstrahl von einem Sender des Geräts ausgesendet, an einem Gegenstand reflektiert und von einem Empfänger des Geräts empfangen. Daraus wird die Entfernung zwischen dem Gerät und dem Gegenstand entweder durch Laufzeitmessungen oder durch Triangulation ermittelt. Der Meßstrahl kann dabei optisch (z.B. Infrarotstrahl oder Laserstrahl) oder akustisch (z.B. Ultraschall) sein. Die durch das Entfernungsmeßsystem ermittelte Entfernung wird in einem von der Entfernung abhängige Stellgröße umgewandelt, welche einer Anzeigevorrichtung zugeführt wird, durch welche die Entfernung in einer für Blinde oder Sehbehinderte angepaßten Form angezeigt wird. Solche Anzeigen bestehen entweder aus akustischen oder vibronischen Signalen.

Durch die DE-A1-37 43 696 ist eine mit einem berührungslosen Entfernungsmeßsystem arbeitende Orientierungshilfe für Blinde bekannt. Ein Infrarot- bzw. Laser-Meßstrahl wird von einem Sender ausgesendet, von einem Hindernis reflektiert, von einem Empfänger empfangen und in ein akustisches Signal umgesetzt. Der Sender und der Empfänger sind in einem vor dem Körper des Blinden zu tragenden Gerät untergebracht. Als Maß der Anzeige der gemessenen Entfernung zum Hindernis wird die Tonhöhe und die Lautstärke der akustischen Signale verwendet.

Die DE-A1-35 44 047 beschreibt ein mit einem berührungslosen Entfernungsmeßsystem arbeitendes Gerät zur Orientierungshilfe für Blinde, bei welchem die Messung der Entfernung zum Hindernis mittels eines sogenannten Ultraschall-Echo-Impuls-Laufzeitverfahrens durchgeführt wird, wobei ein miniaturisiertes Ultraschall-Echo-Impuls-Laufzeit-Auswertungsgerät auf einen Blindenstock aufgesetzt wird. Die von einem Hindernis reflektierten Impulse werden von einem Empfänger empfangen und ausgewertet. Die gemessene Entfernung wird in eine akustisch wahrnehmbare Tonfrequenz übersetzt, so daß eine quasimusikalische Tonfolge bei Annäherung an das Hindernis entsteht.

Durch die DE-A1-44 02 764 ist eine weitere mit einem berührungslosen Entfemungsmeßsystem arbeitende Orientierungshilfe für Sehbehinderte bekannt. Ein Leitgerät enthält einen Radarsignalsender, einen Radarsignalempfänger und eine Auswerteeinrichtung, welche bei einer Frequenzdifferenz zwischen einem ausgesendeten und einem daraufhin empfangenen, von der Umgebung reflektierten Signal ein Steuersignal erzeugt. Das Steuersignal wird einem Signalgeber in Form eines mit elektro-magnetisch bewegbaren Klopfstößel arbeitenden Klopfsignalgebers zugeführt, wobei die mechanische Einwirkung auf den Körper der Person durch steuersignalabhängige Druckkräfte erfolgt. Das Radarsystem und der Klopfsignalgeber sind in einer Kopfbedeckung angeordnet. In einer Weiterbildung des Leitgeräts ist ein zweites Radarsystem und ein zweiter Klopfsignalgeber vorgesehen. Das zweite Radarsystem ist an einem Gürtel angeordnet.

Durch die DE-A1-25 11 935 ist eine weitere mit einem berührungslosen Entfernungsmeßsystem arbeitende Orientierungshilfe für Sehbehinderte bekannt, bei welchem die gemessene Entfernung (und sonstige Meßwerte) akustisch durch Veränderung der Tonhöhe und der Lautstärke oder vibronisch durch Veränderung der Vibrationsfrequenz, der Vibrationsstärke und der Vibrationsform wiedergegeben wird.

Durch die DE-A1-195 22 601 eine weitere mit einem berührungslosen Entfernungsmeßsystem arbeitende Orientierungshilfe für Sehbehinderte bekannt. Eine erste Geräteeinheit enthält einen Ultraschall-Sender und einen Ultraschall-Empfänger. Eine zweite Geräteeinheit enthält einen Mikrorechner für die von dem Empfänger aufgenommene Signale sowie einen als elektromechanischer Vibrator ausgebildeten Signalgeber.

Weitere mit berührungslosen Entfernungsmeßsystemen arbeitende Geräte zur Orientierungshilfe für Blinde, welche ähnliche akustische oder vibronische Signalgeber aufweisen, sind in DE-A1-41 40 976, DE-A1-29 32 659, DE-PS-23 30 940, DE-A1-28 16 530, DE-A1-31 33 645, DE-A1-195 05 402, DE-A1-40 04 438 und DE-A1-38 36 961 beschrieben.

Durch die WO-A-95-21595 ist ein Gerät zur Orientierungshilfe für Blinde und Sehbehinderte bekannt, welches eine taktile Anzeigevorrichtung aufweist. Die Anzeigevorrichtung ist als Matrix ausgeführt und enthält mehrere Reihen von taktilen Elementen, wobei jede Reihe ein bestimmtes Abstandsintervall darstellt. Zur Darstellung eines Abstandes mittels der Anzeigevorrichtung müssen mehrere taktile Elemente gleichzeitig aktiviert werden, wobei jeweils eine bestimmte Kombination aus aktivierten taktilen Elementen jeweils einem bestimmten Abstand entspricht.

Es hat sich gezeigt, daß die Anzeigen der Anzeigevorrichtungen der bekannten, mit berührungslosen Entfernungsmeßsystemen arbeitenden Geräte zur Orientierungshilfe für Blinde nicht zufriedenstellend sind. Dies liegt hauptsächlich daran, daß sowohl akustische als auch vibronische Signale sehr schwer zu interpretieren sind. Die Zuordnung eines akustischen oder vibronischen Signals zu einem bestimmten Abstand erfordert einen sehr großen Übungsaufwand. Beim Empfangen des eigentlichen Meßsignals liegt kein Referenzsignal (z.B. Entfernung Null) vor, mit welchem der Benutzer das Meßsignal vergleichen kann. Weiterhin wirken akustische Signale störend, da Blinde oder Sehbehinderte verstärkt das Gehör bei der Orientierung und der Wahrnehmung der Umwelt einsetzen.

### Offenbarung der Erfindung

Der Erfindung liegt die Aufgabe zugrunde, bei einem Gerät zur Orientierungshilfe für Blinde und Sehbehinderte der eingangs genannten Art, die ermittelte Entfernung in einer für Blinde oder Sehbehinderte leicht und deutlich wahrzunehmender Weise darzustellen.

Erfindungsgemäß wird diese Aufgabe dadurch gelöst, daß
(c) für den gesamten mittels eines Entfernungsmeßsystems abzutastenden Entfernungsbereich eine einzige Abtaststrecke vorgesehen ist, und
(d) die Verlagerung der Fühlanzeige stetig oder quasi-stetig erfolgt.

Die Anzeigevorrichtung (Signalgeber) liefert also eine fühlbare Anzeige, welche die ermittelte Entfernung nicht durch unterschiedliche Töne oder Vibrationen, sondern durch eine Verlagerung darstellt. Dadurch erfolgt eine "direkte" Darstellung der Entfernung. Es wird nämlich eine gemessene Strecke, nämlich die Entfernung zum Gegenstand, in eine fühlbare Strecke, nämlich die Verlagerung der Fühlanzeige umgesetzt. Dies erleichtert die Interpretation der Anzeige erheblich.

Die Abtaststrecke, entlang welcher sich die Fühlanzeige verlagert, wird vom Benutzer abgetastet. Dabei kann die Abtaststrecke so ausgestaltet sein, daß der Benutzer die gesamte Abtaststrecke mit einem Körperteil abfühlen kann, ohne den Körperteil verschieben zu müssen. Beispielsweise kann die Abtaststrecke von einem Teil des Unterarms oder von einem Finger (z.B. dem Daumen) abdeckbar sein. Die Fühlanzeige verlagert sich dann relativ zu dem Körperteil. Der Benutzer fühlt somit die Lage der Fühlanzeige und ordnet dieser Lage einer Entfernung zu.

Die Verlagerung der Fühlanzeige erfolgt nach Maßgabe der gemessenen Entfernung als monotone Funktion, d.h. eine kleinere Entfernung wird durch eine kleinere Verlagerung, eine größere Entfernung durch eine größere Verlagerung dargestellt. Auch dies erleichtert die Interpretation der Anzeige.

Die Verlagerung der Fühlanzeige erfolgt stetig oder quasi-stetig. Eine quasi-stetige Verlagerung bedeutet hier, daß die Verlagerung der Fühlanzeige schrittweise erfolgt.

Als berührungsloses Entfernungsmeßsystem, durch welches eine von der Entfernung zwischen dem Gerät und einem von dem Entfernungsmeßsystem erfaßten Gegenstand abhängige Stellgröße erzeugt wird, kann ein beliebiges Entfernungsmeßsystem verwendet werden. Die vorliegende Erfindung ist nicht an eine bestimmte Ausführung des Entfernungsmeßsystems gebunden. Es kann sich also sowohl um akustisch also auch optisch wirkende Systeme handeln. Solche Entfernungsmeßsysteme sind an sich bekannt und werden hier nicht näher beschrieben.

Bevorzugt wird jedoch ein Laser-Entfernungsmeßsystem verwendet. Die Verwendung eines Laserstrahls zur Entfernungsbestimmung hat zwei wesentliche Vorteile. Aufgrund dessen geringer Strahlaufweitung lassen sich in der Richtung, in welche man mit dem Gerät zeigt, auch noch sehr feine Strukturen, wie z.B. Seile abtasten. Hierzu wird das Gerät leicht hin und her bewegt. Weiterhin ist die Reichweite sehr hoch.

Mit dem erfindungsgemäßen Gerät hat der Blinde also die Möglichkeit, sich durch die Richtungsinformation,. nämlich die Richtung, in die mit dem Gerät gezeigt wird, und die Entfernungsinformation in einer Umgebung zu orientieren, ohne daß sein Gehör zusätzlich belastet wird.

Die Fühlanzeige kann unterschiedliche Ausführungen haben. In einer Ausführung kann die Anzeigevorrichtung ein abtastbares, längs der Abtaststrecke verstellbares Element aufweisen. Die Darstellung der gemessenen Entfernung erfolgt dann durch Verlagerung bzw. Verschiebung des verstellbaren Elements. Dabei kann das bewegliche Element ein Schieber sein, welcher beispielsweise durch einen Stellmotor verschoben wird. Das bewegliche Element kann aber auch ein schwenkbarer Hebel sein, welcher nach Maßgabe der gemessenen Entfernung verschwenkt wird, so daß sich das freie Ende des Hebels entlang der Abtaststrecke bewegt.

In einer weiteren Ausführung der Anzeigevorrichtung kann die Fühlanzeige eine längs der Abtaststrecke angeordnete Reihe von quer zur Abtaststrecke verstellbaren Gliedern bestehen. Dabei kann jedem Glied eine bestimmte Entfernung zugeordnet sein, so daß das Ansteuern und Verstellen eines bestimmten Glieds einer bestimmten Entfernung entspricht. In diesem Fall verlagern sich also die Glieder selbst nicht entlang der Abtaststreckc, sondern quer dazu. Die Glieder können z.B. piezoelektrisch verstellbar sein oder selbst piezoelektrische Elemente sein.

Es können Vibrationsmittel vorgesehen sein, durch welche die längs der Abtaststrecke verstellbaren Elemente bzw. die quer zur Abtaststrecke verstellbaren Glieder in Vibration versetzbar sind. Die Vibrationsmittel können aber auch andere, zusätzliche Elemente wie beispielsweise ein Vibrationskissen für die Handfläche in Vibration versetzen. Durch diese Vibration können weitere Eigenschaften wie Oberflächenrauhigkeit oder Reflexionkoeffizienten der Oberfläche des erfaßten Gegenstands durch die Anzeigevorrichtung dargestellt werden.

Die Anzeigevorrichtung kann eine längs der Abtaststrecke angeordnete Reihe von Elementen enthalten, durch welche elektrische oder thermische Impulse erzeugbar sind. Diese Impulse werden dann vom Benutzer gefühlt.

Vorzugsweise ist ein fühlbarer Referenzpunkt vorgesehen, welcher als Referenz für die Anzeige dient. Die Fühlanzeige befindet sich dann immer in einem Abstand von dem Referenzpunkt, welcher von der gemessenen Entfernung abhängig ist. Dies erleichtert die Interpretation der Anzeige.

Die monotone Funktion, nach welcher die Fühlanzeige sich längs der Abtaststrecke verlagert, d.h. die Übertragungsfunktion zwischen der gemessenen Entfernung und der Verlagerung der Fühlanzeige, kann verschiedene Form haben. Im einfachsten Fall ist sie eine lineare Funktion, d.h. die Verlagerung der Fühlanzeige erfolgt proportional zu der gemessenen Entfernung. Eine solche proportionale Verlagerung ist insbesondere bei kleinen Entfernungen bis zu einigen Metern günstig. Beim Erfassen von größeren Entfernungsbereichen würde eine proportionale Verlagerung jedoch zu sehr kleinen Veränderungen der Fühlanzeige bei kleinen Entfernungen führen. Vorteilhafterweise erfolgt deswegen die Verlagerung der Fühlanzeige längs der Abtaststrecke logarithmisch in Abhängigkeit von der durch das Entfernungsmeßsystem gemessenen Entfernung. Entfernungsänderungen in einem nahen Entfemungsbereich erzeugen somit eine größere Verlagerung der Fühlanzeige als Entfernungsänderungen in einem entfernten Entfernungsbereich. Natürlich kann auch jede andere monotone Funktion verwendet werden, beispielsweise eine quadratische Funktion.

Es können Mittel zum Verändern der monotonen Funktion vorgesehen sein. Dadurch kann (entweder werkseitig oder vom Benutzer selbst) die Funktion gemäß den individuellen Bedürfnisse des Benutzers eingestellt werden, oder der Benutzer kann die Funktion auswählen, welche gerade den Gegebenheiten am besten entspricht.

Das erfindungsgemäße Gerät kann Anzeigebereich-Umschaltmittel aufweisen, durch welche der Anzeigebereich der Anzeigevorrichtung umschaltbar ist. Dadurch erfolgt also eine Veränderung der Übertragungsfunktion zwischen gemessener Entfernung und Verlagerung der Fühlanzeige. Durch diese Anzeigebereich-Umschaltmittel ist es also möglich, den vollen Ausschlag der Fühlanzeige verschiedenen Anzeigebereichen zuzuordnen. Beispielsweise kann in einer ersten Schaltstellung der Anzeigebereich-Umschaltmittel der Anzeigebereich 0-1 m, in einer zweiten Schaltstellung der Anzeigebereich 0-3 m, in einer dritten Schaltstellung der Anzeigebereich 0-10 m und in einer vierten Schaltstellung der Anzeigebereich 0-30 m durch die Fühlanzeige dargestellt werden.

Die Anzeigebereich-Umschaltmittel können ein oder mehrere Betätigungsglieder enthalten. durch welche die Anzeigebereiche umgeschaltet werden können. Diese Betätigungsglieder können beispielsweise Schalter oder Taster sein. Dabei kann jedem Taster ein Anzeigebereich zugeordnet sein. Durch Betätigen eines der Taster wird dann der entsprechende Anzeigebereich eingestellt.

Vorzugsweise ist die Fühlanzeige in einem Gehäuse vorgesehen, welches an einem Körperbereich des Benutzers anlegbar ist. Dabei ist es günstig, wenn das Gehäuse in einer definierten, reproduzierbaren Position an dem Körperbereich angelegt wird, so daß die Fühlanzeige immer die gleiche Stelle des Körpers berührt. Dies kann dadurch erreicht werden, daß das Gehäuse an dem Unterarm des Benutzers anlegbar und befestigbar ist. Die Form des Gehäuses wird dann vorzugsweise an die Form des Unterarms angepaßt. Das Gehäuse kann aber auch als Handgerät ausgebildet sein, wobei sich die Abtaststrecke an der Außenseite des Gehäuses befindet und durch einen Finger des Benutzers erfaßbar sein kann. Durch Bewegung des Geräts läßt sich die Richtung einstellen, in welcher Hindernisse gemessen werden können. Die Ausführung des Gehäuses ist dann vorzugsweise so, daß der Benutzer die Orientierung und die Lage des Gehäuses in der Hand durch Fühlen feststellen kann. Dies kann durch bestimmte Vorsprünge oder Ausnehmungen an dem Gehäuse erzielt werden.

Bei der Ausbildung als Handgerät hat es sich als vorteilhaft herausgestellt, wenn sich die Abtaststrecke an einem Bereich des Gehäuses befindet, welcher durch den Daumen abfühlbar ist. Eventuell vorhandene Anzeigebereich-Umschalttaster können dann so angeordnet sein, daß sie mit den anderen Fingern der Hand betätigbar sind.

Vorzugsweise verläuft die Abtaststrecke in einer Ausnehmung in dem Gehäuse. Diese Ausnehmung kann beispielsweise eine Mulde sein, deren Form an die Form des Daumens angepaßt ist. Die Betätigungsglieder der Anzeigebereich-Umschaltmittel können ebenfalls in einer bzw. mehreren Ausnehmungen des Gehäuses vorgesehen sein, wobei die Form der Ausnehmungen an die Form der Finger angepaßt sein können.

Die einzelnen Funktionseinheiten des Geräts, d.h. Entfernungsmeßsystem, Anzeigevorrichtung und zugehörige Elektronik und Stromversorgung können in verschiedenen Gehäusen untergebracht sein. In einer Ausführung des erfindungsgemäßen Geräts ist das gesamte Gerät jedoch in einem einzigen Gehäuse vorgesehen. Dadurch wird das Gerät sehr handlich.

Das Gerät kann auch zwei oder mehrere berührungslose Entfernungsmeßsysteme enthalten, welche jeweils eine von der Entfernung zwischen dem Gerät und jeweils einem von dem jeweiligen Entfernungsmeßsystem erfaßten Gegenstand abhängige Stellgröße erzeugen. Diese Entfernungsmeßsysteme können sowohl von gleicher als auch unterschiedlicher Art sein. Sie können in die gleiche Richtung zeigen, wobei dann eine Signalverbesserung erzielbar ist. Sie können aber auch verschiedene Raumbereiche abdecken, so daß mehrere unterschiedliche Meßwerte erhalten werden. Es können dann auch mehrere Anzeigevorrichtungen vorgesehen werden. Diese Anzeigevorrichtungen können ebenfalls unterschiedlicher Art sein. Jedem Entfernungsmeßsystem ist eine unabhängige Anzeigevorrichtung zugeordnet. Diese Anzeigevorrichtungen sind Fühlanzeigen, wie sie oben beschrieben sind. Dabei können die Abtaststrecken, entlang welchen sich die unabhängigen Fühlanzeigen verlagern, nebeneinander verlaufen, so daß alle Fühlanzeigen mit einem einzigen Körperteil gleichzeitig gefühlt werden können. Die unabhängigen Fühlanzeigen können dabei parallel oder auch in einem Winkel zu einander verlaufen. In dieser Weise ist es insbesondere möglich, Konturen von Gegenständen, beispielsweise eine Bordsteinkante abzufühlen, ohne das Gerät zu verschwenken.

Das erfindungsgemäße Gerät ist vorzugsweise batteriebetrieben. Es können dann Mittel zum Erzeugen eines Warnsignals bei abfallender Batteriespannung vorgesehen sein. Dieses Warnsignal kann entweder ein akustisches oder ein taktiles Signal sein. Dadurch erfährt der Benutzer rechtzeitig ein eventuelles Ausfallen des Geräts.

Das erfindungsgemäße Gerät kann mit einem teleskopartig herausfahrbaren Stab versehen sein, welcher in dem Gehäuse angeordnet sein kann, in welchem auch das oder die Entfemungsmeßsysteme angeordnet sind. Der Benutzer kann diesen Stab herausfahren und ihn als normalen Blindenstock verwenden, wenn das Gerät ausfallen sollte.

Ausführungsbeispiele der Erfindung sind nachstehend unter Bezugnahme auf die zugehörigen Zeichnungen näher erläutert.

### Kurze Beschreibung der Zeichnungen

- Fig. 1: ist eine teilweise geschnittene, schematische Seitenansicht und zeigt ein Ausführungsbeispiel eines Geräts zur Orientierungshilfe für Blinde und Sehbehinderte, welches als Handgerät ausgebildet ist.
- Fig. 2: ist eine schematische Darstellung und zeigt ein Ausführungsbeispiel der Fühlanzeige bei einem Gerät zur Orientierungshilfe für Blinde und Sehbehinderte.
- Fig. 3: ist eine schematische Darstellung und zeigt ein weiteres Ausführungsbeispiel der Fühlanzeige bei einem Gerät zur Orientierungshilfe für Blinde und Sehbehinderte.
- Fig. 4: ist eine schematische Seitenansicht und zeigt ein weiteres Ausführungsbeispiel eines Geräts zur Orientierungshilfe für Blinde und Sehbehinderte, welches als Handgerät ausgebildet ist.

### Bevorzugte Ausführungen der Erfindung

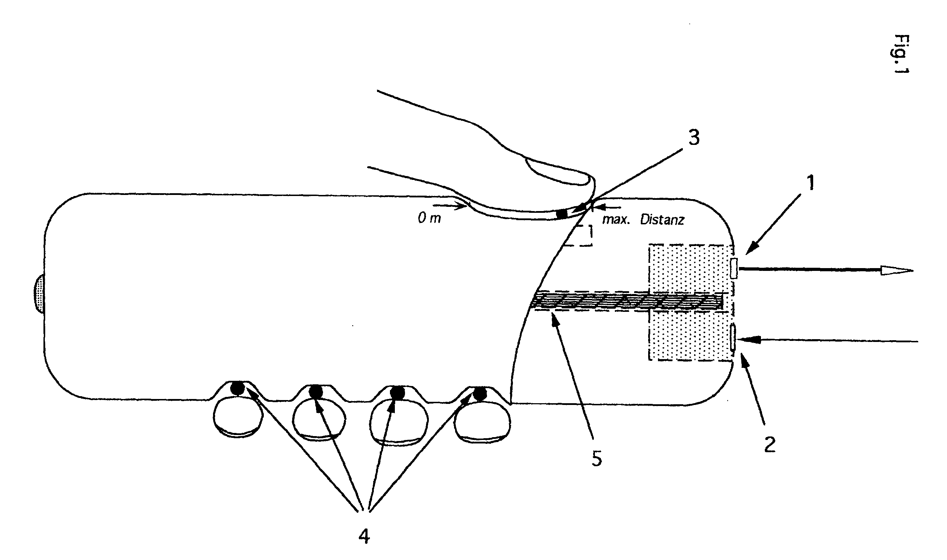

Das in Fig. 1 dargestellte Ausführungsbeispiel ist ein Handgerät, welches mit einem einzigen berührungslosen Entfernungsmeßsystem versehen ist. Das Entfernungsmeßsystem ist hier ein Lasersystem, mit welchem die Entfernung mittels Laufzeitmessungen ermittelt wird. Die Sende- und Empfangseinrichtung des Laser-Entfernungsmeßsystems befindet sich an dem vorderen Ende des Handgeräts. Hierbei handelt es sich vorzugsweise um einen Diodenlaser 1, welcher mit schwacher Leistung (welche die Ungefährlichkeit für andere Personen gewährleistet) im nahen Infrarotbereich emittiert und eine geeignete Photodiode 2, welche den reflektierten Strahl empfängt. Die Laufzeit des Laserstrahls wird in bekannter Weise ermittelt und durch eine elektronische Schaltung wird eine elektrische Stellgröße nach Maßgabe der ermittelten Entfernung erzeugt. Die Spannungsversorgung erfolgt in diesem Ausführungsbeispiel über eine in das Gerät integrierte Batterie. Solche Laser-Entfernungsmeßsysteme sind an sich bekannt und daher hier nicht im einzelnen beschrieben.

Die erzeugte Stellgröße wird einer Anzeigevorrichtung zugeführt. Die Anzeigevorrichtung enthält einen Stellmotor, durch welchen eine Fühlanzeige verlagert wird. In diesem Ausführungsbeispiel enthält die Fühlanzeige einen Schieber in Form eines kleinen Knopfs 3, welcher an der oberen Seite des Geräts vorgesehen ist. Die durch die Laufzeitdifferenz von emittiertem und gestreutem Strahl bestimmte Entfernung wird also durch den Knopf 3 angezeigt. Dieser Knopf bewegt sich längs einer Abtaststrecke über eine Distanz von ca. 3 cm und kann mit dem Daumen erfühlt werden. Dabei kann sich der Knopf 3 beispielsweise linear mit der ermittelten Entfernung bewegen. Der Knopf 3 bewegt sich stetig oder quasi-stetig in kleinen Schritten.

In dem in Fig. 1 dargestellten Ausführungsbeispiel sind Anzeigebereich-Umschaltmittel vorgesehen, durch welche der Anzeigebereich der Anzeigevorrichtung umschaltbar ist. Der Anzeigebereich wird durch Betätigungsglieder in Form von vier Tastern 4 an der Unterseite des Geräts eingestellt. So wird z.B. mit dem ersten Taster ein Bereich von 0 - 1 m gewählt. Das bedeutet, daß der reale Anzeigebereich von 3 cm einer gemessenen Entfernung von 1 m entspricht. Wird der Strahl innerhalb dieser Entfernung nicht reflektiert, so befindet sich der Abtastknopf 3 am vorderen Anschlag. Nun wird der nächste Bereich, z.B. 0-3 m gewählt. Wird der Strahl nun nach 1,5 m reflektiert, so ist die Position des Abtastknopfs 3 in der Mitte des Anzeigebereichs.

In einer weiteren möglichen Ausführungsform wird die Distanz in logarithmischem Maßstab dargestellt. In diesem Fall ist die Auflösung im Nahbereich automatisch deutlich höher als in weiterer Entfernung. Somit sind weniger Anzeigebereiche notwendig oder sie erübrigen sich sogar ganz.

In einer weiteren Ausführungsform enthält das Gerät Mittel zum Verändern der funktionalen Form des Maßstabes. Der Benutzer kann dann beispielsweise zwischen linearer und logarithmischer Darstellung umschalten. Diese Mittel können ebenfalls Taster enthalten, welche ähnlich ausgeführt sind wie die Taster der Anzeigebereich-Umschaltmittel.

Um die Gewöhnung an das neue Gerät zu erleichtern und als Sicherheit z.B. bei abfallender Batteriespannung wird in dem in Fig. 1 dargestellten Ausführungsbeispiel in das Gerät ein Teleskopstab 5 integriert, der als gewöhnlicher Blindenstock benutzt werden kann.

Wie aus Fig. 1 ersichtlich, verläuft die Abtaststrecke und damit auch der Knopf 3 in einer Ausnehmung in Form einer Mulde, welche an die Form des Daumens angepaßt ist. Die vier Taster 4 befinden sich ebenfalls in Mulden, welche an die Form der Finger angepaßt sind. (In Fig. 1 ist oben der Daumen und unten die Spitzen der restlichen Finger einer Hand des Benutzers angedeutet.) Durch diese Ausbildung wird das Finden des Knopfs 3 und der Taster 4 erleichtert. Weiterhin wird die Lage und Ausrichtung des Geräts dadurch ertastet.

In einer weiteren (in den Zeichnungen nicht dargestellten) Ausführungsform ist ein schwenkbarer Hebel statt des verschiebbaren Knopfs 3 als Teil der Fühlanzeige vorgesehen.

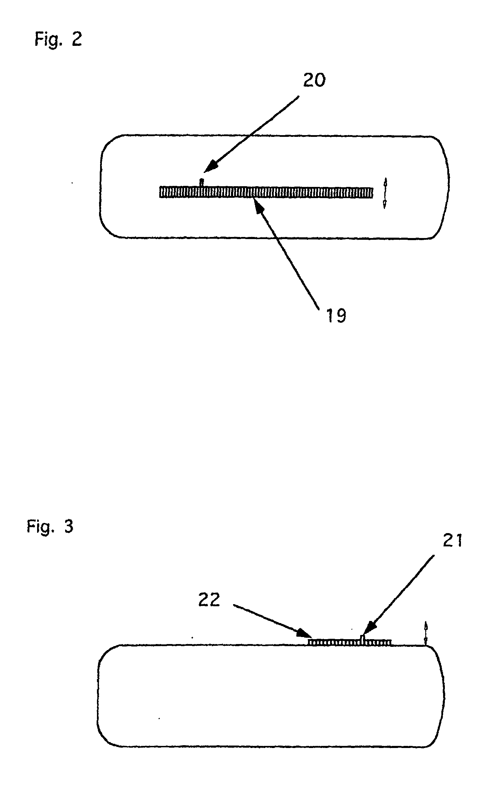

In Fig. 2 ist ein weiteres Ausführungsbeispiel der Fühlanzeige schematisch in einer Draufsicht dargestellt. Alle weiteren. in Fig. 1 dargestellten Teile sind in Fig. 2 weggelassen. Statt des verschiebbaren Knopfs 3 (Fig. 1) ist eine Reihe 19 von quer zur Abtaststrecke verstellbaren Gliedern als Teil der Fühlanzeige vorgesehen. Die Verstellrichtung der Glieder ist durch einen Doppelpfeil in Fig. 2 angedeutet. Die Glieder der Reihe 19 können piezoelektrisch oder sonstwie verstellbar sein. In Fig. 2 ist eines der Glieder 20 verstellt. Diese Verstellung fühlt dann der Benutzer als Anzeige der gemessenen Entfernung.

In Fig. 3 ist ein weiteres Ausführungsbeispiel der Fühlanzeige schematisch in einer Seitenansicht dargestellt. Alle weiteren, in Fig. 1 dargestellten Teile sind in Fig. 3 weggelassen. Statt des verschiebbaren Knopfs 3 (Fig. 1 ) ist eine Reihe 22 von quer zur Abtaststrecke verstellbaren Gliedern als Teil der Fühlanzeige vorgesehen. Die Verstellrichtung der Glieder ist durch einen Doppelpfeil in Fig. 3 angedeutet. Die Glieder der Reihe 22 können piezoelektrisch oder sonstwie verstellbar sein. In Fig. 3 ist eines der Glieder 21 verstellt. Diese Verstellung fühlt dann der Benutzer als Anzeige der gemessenen Entfernung.

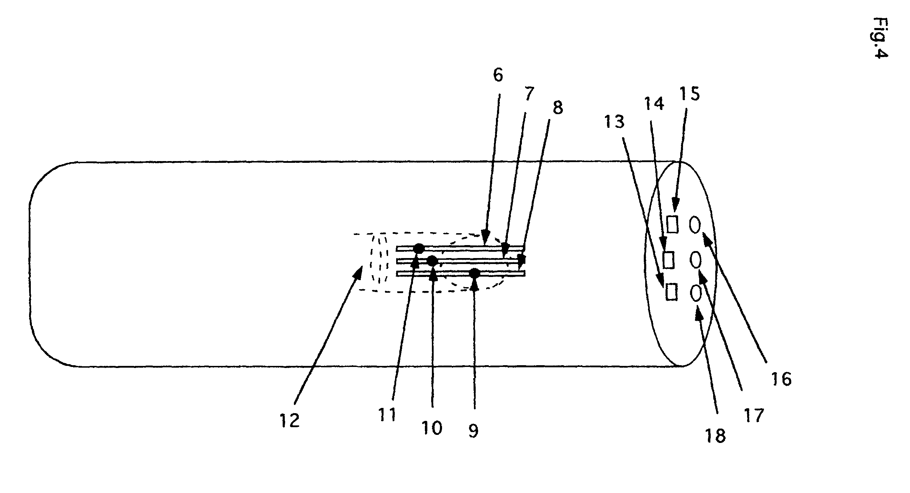

In Fig.4 ist ein weiteres Ausführungsbeispiel des Geräts zur Orientierungshilfe für Blinde und Sehbehinderte dargestellt. Das in Fig.4 dargestellte Gerät kann ähnlich aufgebaut sein wie das in Fig. 1 dargestellte Gerät. Statt nur ein berührungsloses Entfernungsmeßsystem und nur eine Fühlanzeige sind hier jedoch drei berührungslose Entfernungsmeßsysteme und drei Fühlanzeigen in einem einzigen Gerät integriert. Statt nur eine Laserdiode 1 und nur eine Photodiode 2 (Fig. 1) sind dann drei Laserdioden 13, 14 und 15 und drei Photodioden 16, 17 und 18 vorgesehen. Dabei zeigen die drei Laserdioden 13, 14 und 15 in verschiedene Richtungen, so daß nicht nur ein Punkt, sondern drei Punkte erfaßt werden. Die drei Entfernungsmeßsysteme liefern drei Stellgrößen, welche drei Anzeigevorrichtungen zugeführt werden. Die Anzeigevorrichtungen sind ähnlich aufgebaut wie die in Fig. 1 dargestellte Anzeigevorrichtung. Zu jeder Anzeigevorrichtung gehört dann eine Abtaststrecke 6, 7 bzw. 8 und ein entlang der entsprechenden Abtaststrecke 6, 7 bzw. 8 verstellbaren Knopf 9, 10 bzw. 11. Die drei Abtaststrecken 6, 7 und 8 sind in diesem Ausführungsbeispiel direkt nebeneinander angeordnet und verlaufen parallel zueinander. Dadurch können alle drei Abtaststrecken 6, 7 und 8 gleichzeitig von einem Körperteil, in diesem Fall von dem Daumen 12 abgedeckt werden.

In einem weiteren Ausführungsbeispiel erfolgt die Entfernungsanzeige an einem anderen Körperteil, z.B. entlang des Unterarmes entweder mechanisch wie in dem dargestellten Ausführungsbeispiel oder auch durch elektrische oder thermische Stimulation.

## Patentansprüche

1. Gerät zur Orientierungshilfe für Blinde und Sehbehinderte, enthaltend
(a) mindestens ein berührungsloses Entfernungsmeßsystem (1,2;13,14,15,16, 17,18), welches eine von der Entfernung zwischen dem Gerät und einem von dem Entfernungsmeßsystem (1,2,13,14,15,16,17,18) erfaßten Gegenstand abhängige Stellgröße erzeugt, und
(b) mindestens eine Anzeigevorrichtung,
(b₁) welche von der Stellgröße des Entfernungsmeßsystems (1,2;13,14,15,16,17,18) beaufschlagt wird,
(b₂) eine von der Stellgröße abhängige Anzeige liefert, und
(b₃) mindestens eine Fühlanzeige (3;9,10,11) aufweist, welche sich längs einer Abtaststrecke (6;7;8) als monotone Funktion der durch das Entfernungsmeßsystem (1,2;13,14,15,16,17,18) gemessenen Entfernung verlagert,
**dadurch gekennzeichnet, daß**
(c) für den gesamten mittels eines Entfernungsmeßsystems (1,2;13,14,15,16, 17,18) abzutastenden Entfernungsbereich eine einzige Abtaststrecke vorgesehen ist, und
(d) die Verlagerung der Fühlanzeige (3;9,10,11) stetig oder quasi-stetig erfolgt.

2. Gerät nach Anspruch 1, **dadurch gekennzeichnet, daß** die Anzeigevorrichtung ein abtastbares, längs der Abtaststrecke verstellbares Element (3;6,7,8) aufweist.

3. Gerät nach Anspruch 2 **dadurch gekennzeichnet, daß** die Anzeigevorrichtung einen von der Stellgröße des Entfernungsmeßsystems (1,2;13,14,15,16,17,18) beaufschlagten Stellmotor zum Verstellen des abtastbaren Elements (3;6,7,8) enthält.

4. Gerät nach Anspruch 2 oder 3, **dadurch gekennzeichnet, daß** das bewegliche Element ein Schieber (3;6,7,8) ist.

5. Gerät nach Anspruch 2 oder 3, **dadurch gekennzeichnet, daß** das bewegliche Element ein schwenkbarer Hebel ist.

6. Gerät nach einem der Ansprüche 1-5, **dadurch gekennzeichnet, daß** die Anzeigevorrichtung eine längs der Abtaststrecke angeordnete Reihe (19;22) von quer zur Abtaststrecke verstellbaren Gliedern (20;21) enthält.

7. Gerät nach Anspruch 6, **dadurch gekennzeichnet, daß** die verstellbaren Glieder (20;21 ) piezoelektrisch verstellbar sind.

8. Gerät nach einem der Ansprüche 2-7, **gekennzeichnet durch** Vibrationsmittel, **durch** welche die längs der Abtaststrecke verstellbare Elemente (3;6,7,8) bzw. die quer zur Abtaststrecke verstellbaren Glieder (20;21) oder andere zusätzlichen Glieder in Vibration versetzbar sind.

9. Gerät nach einem der Ansprüche 1-8, **dadurch gekennzeichnet, daß** die Anzeigevorrichtung eine längs der Abtaststrecke angeordnete Reihe von Elementen enthält, durch welche elektrische oder thermische Impulse erzeugbar sind.

10. Gerät nach einem der Ansprüche 1-9, **gekennzeichnet durch** einen fühlbaren Referenzpunkt, welcher als Referenz für die Anzeige dient.

11. Gerät nach einem der Ansprüche 1-10, **gekennzeichnet durch** Mittel zum Verändern der monotonen Funktion.

12. Gerät nach einem der Ansprüche 1-11, **dadurch gekennzeichnet, daß** die Verlagerung der Fühlanzeige (3;6,7,8) längs der Abtaststrecke proportional zu der durch das Entfernungsmeßsystem (1,2,13,14,15,16,17,18) gemessenen Entfernung erfolgt.

13. Gerät nach einem der Ansprüche 1-11, **dadurch gekennzeichnet, daß** die Verlagerung der Fühlanzeige (3;6,7,8) längs der Abtaststrecke logarithmisch in Abhängigkeit von der durch das Entfernungsmeßsystem (1,2;13,14,15,16,17,18) gemessenen Entfernung erfolgt.

14. Gerät nach einem der Ansprüche 1-13, **gekennzeichnet durch** Anzeigebereich-Umschaltmittel (4), **durch** welche der Anzeigebereich der Anzeigevorrichtung umschaltbar ist.

15. Gerät nach Anspruch 14, **dadurch gekennzeichnet, daß** die Anzeigebereich-Umschaltmittel ein oder mehrere Betätigungsglieder (4) enthalten.

16. Gerät nach einem der Ansprüche 1-15, **dadurch gekennzeichnet, daß** die Fühlanzeige in einem Gehäuse vorgesehen ist, welches an einem Körperbereich des Benutzers anlegbar ist.

17. Gerät nach Anspruch 16, **dadurch gekennzeichnet, daß** das Gehäuse an den Unterarm des Benutzers anlegbar und befestigbar ist.

18. Gerät nach Anspruch 16, **dadurch gekennzeichnet, daß** das Gehäuse als Handgerät ausgebildet ist.

19. Gerät nach Anspruch 18, **dadurch gekennzeichnet, daß** das sich die Abtaststrecke (6,7,8) an der Außenseite des Gehäuses befindet und durch ein Finger (12) des Benutzers erfaßbar ist.

20. Gerät nach Anspruch 19, **gekennzeichnet durch** eine Ausnehmung in dem Gehäuse, in welcher die Abtaststrecke (6,7,8) verläuft.

21. Gerät nach einem der Ansprüche 15-20, **dadurch gekennzeichnet, daß** das bzw. die Betätigungsglieder (4) der Anzeigebereich-Umschaltmittel ebenfalls in dem Gehäuse vorgesehen sind.

22. Gerät nach Anspruch 21, **dadurch gekennzeichnet, daß** das bzw. die Betätigungsglieder (4) durch ein bzw. mehrere Finger des Benutzers betätigbar sind.

23. Gerät nach Anspruch 22, **dadurch gekennzeichnet, daß** das bzw. die Betätigungsglieder (4) in einer bzw. mehreren Ausnehmungen des Gehäuses vorgesehen sind.

24. Gerät nach einem der Ansprüche 1-23, **dadurch gekennzeichnet, daß** das gesamte Gerät in einem einzigen Gehäuse vorgesehen ist.

25. Gerät nach Anspruch 1, **gekennzeichnet durch**
(a) zwei oder mehrere berührungslose Entfernungsmeßsysteme (13,14,15,16,17,18), welche jeweils eine von der Entfernung zwischen dem Gerät und jeweils einem von dem jeweiligen Entfernungsmeßsystem erfaßten Gegenstand abhängige Stellgröße erzeugen, und
(b) eine oder mehrere Anzeigevorrichtungen nach einem der Ansprüche 1-24.

26. Gerät nach einem der Ansprüche 1-25, **gekennzeichnet durch** zwei oder mehrere Fühlanzeigen (9,10,11), welche sich längs nebeneinander verlaufenden Abtaststrecken (6,7,8) verlagern.

27. Gerät nach einem der Ansprüche 1-26, **dadurch gekennzeichnet, daß** das Gerät batteriebetrieben ist und daß Mittel zum Erzeugen eines Warnsignals bei abfallender Batteriespannung vorgesehen ist.

28. Gerät nach einem der Ansprüche 1-27, **gekennzeichnet durch** einen teleskopartig herausfahrbaren Stab (5).

## Claims

1. Device to aid the orientation of blind and partially sighted people, comprising
(a) at least one contactless distance measurement system (1,2;13,14,15,16,17,18), which generates a correcting variable depending on the distance between the device and an object measured by the distance measurement system (1,2;13,14,15,16,17,18), and
(b) at least one indicating device,
(b₁) to which the correcting variable of the distance measurement system (1,2;13,14,15,16,17,18) is applied and which
(b₂) supplies an indication depending on the correcting variable and
(b₃) comprises at least one tactile indicator (3,9,10,11), which is displaced along a tactile path (6;7;8) as monotone function of the distance measured by the distance measurement system (1,2;13,14,15,16,17,18),
**characterized in that**
(c) one single tactile path is provided for the entire distance range to be scanned by means of one distance measurement system (1,2;13,14,15,16,17,18), and
(d) the tactile indicator (3;9,10,11) is displaced continuously or quasi continuously.

2. A device as set forth in claim 1, **characterized in that** the indicating device comprises a tactile element (3;6,7,8) displaceable along the tactile path.

3. A device as set forth in claim 2, **characterized in that** the indicating device comprises a servomotor, to which the correcting variable of the distance measurement system (1,2;13,14,15,16,17,18) is applied and which is arranged to displace the tactile element (3;6,7,8).

4. A device as set forth in claims 2 or 3, **characterized in that** the moveable element is a slide (3;6,7,8).

5. A device as set forth in claims 2 or 3, **characterized in that** the moveable element is a swivelling lever.

6. A device as set forth in anyone of the claims 1-5, **characterized in that** the indicating device comprises a row (19;22) of elements (20;21) placed along the tactile path and displaceable perpendicularly to the tactile path.

7. A device as set forth in claim 6, **characterized in that** the displaceable elements (20;21) are displaceable piezoelectrically.

8. A device as set forth in anyone of the claims 2-7, **characterized by** vibrating means adapted to vibrate the elements (3;6,7,8) displaceable along the tactile path or the elements (20;21) displaceable perpendicularly to the tactile path, respectively, or other additional elements.

9. A device as set forth in anyone of the claims 1-8, **characterized in that** the indicating device comprises a row of elements placed along the tactile path and adapted to generate electrical or thermal pulses.

10. A device as set forth in anyone of the claims 1-9, **characterized by** a tactile reference point which serves as a reference for the indicator.

11. A device as set forth in anyone of the claims 1-10, **characterized by** means to change the monotone function.

12. A device as set forth in anyone of the claims 1-11, **characterized in that** the displacement of the tactile indicator (3;6,7,8) along the tactile path is effected proportionally to the distance measured by the distance measurement system (1,2; 13,14,15,16,17,18).

13. A device as set forth in anyone of the claims 1-11, **characterized in that** the displacement of the tactile indicator (3;6,7,8) along the tactile path is effected in a logarithmic dependence of the distance measured by the distance measurement system (1,2;13,14,15,16,17,18).

14. A device as set forth in anyone of the claims 1-13, **characterized by** indication range switching means (4) adapted to switch the indication range of the indicating device.

15. A device as set forth in claim 14, **characterized in that** the indication range switching means comprise one or more actuating elements (4).

16. A device as set forth in anyone of the claims 1-15, **characterized in that** the tactile indicator is provided in a housing adapted to be put on one part of the users body.

17. A device as set forth in claim 16, **characterized in that** the housing is adapted to be put on and fastened to the forearm of the user.

18. A device as set forth in claim 16, **characterized in that** the housing is designed as a hand held device.

19. A device as set forth in claim 18, **characterized in that** the tactile path (6,7,8) is located on the outside of the housing and is perceptible by a finger (12) of the user.

20. A device as set forth in claim 19, **characterized by** a recess in the housing, in which the tactile path (6,7,8) extends.

21. A device as set forth in anyone of the claims 15-20, **characterized in that** the actuating element or elements (4), respectively, of the indication range switching means likewise are provided in the housing.

22. A device as set forth in claim 21, **characterized in that** the actuating element or elements (4), respectively, are adapted to be actuated by one or several fingers of the user.

23. A device as set forth in claim 22, **characterized in that** the actuating element or elements (4), respectively, are provided in one or several recesses of the housing.

24. A device as set forth in anyone of the claims 1-23, **characterized in that** the entire device is provided in one single housing.

25. A device as set forth in claim 1, **characterized by**
(a) two or more contactless distance measurement systems (13,14,15,16,17,18) each generating a correcting variable depending on the distance between the device and an object detected by each of the distance measuring systems, and
(b) one or several indicating devices as claimed in 1-24.

26. A device as set forth in anyone of the claims 1-25, **characterized by** two or several tactile indicators (9,10,11), which are displaceable along tactile paths (6,7,8) extending side by side.

27. A device as set forth in anyone of the claims 1-26, **characterized in that** the device is running by battery and that means are provided to generate a warning signal when the battery voltage breaks down.

28. A device as set forth in anyone of the claims 1-27, **characterized by** a telescopically extendable cane (5).

## Revendications

1. Instrument destiné à aider les non-voyants et les malvoyants à s'orienter, comprenant
(a) au moins un système de mesure de la distance sans contact (1,2;13,14,15,16,17,18) qui génère une grandeur de commande dépendant de la distance entre l'instrument et un objet détecté par le système de mesure de la distance (1,2;13,14,15,16,17,18), et
(b) au moins un dispositif d'affichage
(b₁) auquel est appliquée la grandeur de commande du système de mesure de la distance (1,2;13,14,15,16,17,18),
(b₂) qui fournit un affichage dépendant de la grandeur de commande, et
(b₃) qui présente au moins un affichage tactile (3;9,10,11) qui se déplace le long d'une trajectoire de balayage (6;7;8) en tant que fonction monotone de la distance mesurée par le système de mesure de la distance (1,2;13,14,15,16,17,18),
**caractérisé en ce que**
(c) il est prévu une seule trajectoire de balayage pour tout le domaine de distance devant être balayé au moyen d'un système de mesure de la distance (1,2;13,14,15,16,17,18), et
(d) le déplacement de l'affichage tactile (3;9,10,11) s'effectue constamment ou quasiment constamment.

2. Instrument selon la revendication 1, **caractérisé en ce que** le dispositif d'affichage présente un élément (3;6,7,8) susceptible d'être balayé et de se déplacer le long de la trajectoire de balayage.

3. Instrument selon la revendication 2, **caractérisé en ce que** le dispositif d'affichage comprend un servomoteur auquel est appliquée la grandeur de commande du système de mesure de la distance (1,2;13,14,15,16,17,18) et qui est destiné à déplacer l'élément susceptible d'être balayé (3;6,7,8).

4. Instrument selon la revendication 2 ou 3, **caractérisé en ce que** l'élément susceptible de se déplacer est un bouton-poussoir (3;6,7,8).

5. Instrument selon la revendication 2 ou 3, **caractérisé en ce que** l'élément susceptible de se déplacer est un levier susceptible de pivoter.

6. Instrument selon l'une quelconque des revendications 1-5, **caractérisé en ce que** le dispositif d'affichage comprend une rangée (19;22), disposée le long de la trajectoire de balayage, d'organes (20;21) susceptibles de se déplacer diagonalement par rapport à la trajectoire de balayage.

7. Instrument selon la revendication 6, **caractérisé en ce que** les organes susceptibles de se déplacer (20;21) sont susceptibles de se déplacer par commande piézoélectrique.

8. Instrument selon l'une quelconque des revendications 2-7, **caractérisé en ce que** des moyens de vibration grâce auxquels les éléments (3;6,7,8) susceptibles de se déplacer le long de la trajectoire de balayage ou les organes (20;21) respectivement susceptibles de se déplacer diagonalement par rapport à la trajectoire de balayage ou d'autres organes supplémentaires sont susceptibles de se mettre à vibrer.

9. Instrument selon l'une quelconque des revendications 1-8, **caractérisé en ce que** le dispositif d'affichage comprend une rangée d'éléments disposée le long de la trajectoire de balayage grâce auxquels des impulsions thermiques ou électriques sont susceptibles d'être générées.

10. Instrument selon l'une quelconque des revendications 1-9, **caractérisé par** un point de référence tactile servant de référence pour l'affichage.

11. Instrument selon l'une quelconque des revendications 1-10, **caractérisé par** des moyens destinés à modifier la fonction monotone.

12. Instrument selon l'une quelconque des revendications 1-11, **caractérisé en ce que** le déplacement de l'affichage tactile (3;6,7,8) le long de la trajectoire s'effectue proportionnellement par rapport à la distance mesurée par le système de mesure de la distance (1,2;13,14,15,16,17,18).

13. Instrument selon l'une quelconque des revendications 1-11, **caractérisé en ce que** le déplacement de l'affichage (3;6,7,8) le long de la trajectoire de balayage s'effectue par logarithme en fonction de la distance mesurée par le système de mesure de la distance (1,2;13,14,15,16,17,18).

14. Instrument selon l'une quelconque des revendications 1-13, **caractérisé par** des moyens de commutation du domaine d'affichage (4) grâce auxquels le domaine du dispositif d'affichage est susceptible d'être commuté.

15. Instrument selon la revendication 14, **caractérisé en ce que** les moyens de commutation du domaine d'affichage comprennent un ou plusieurs organes d'actionnement (4).

16. Instrument selon l'une quelconque des revendications 1-15, **caractérisé en ce que** l'affichage tactile est prévu dans un boîtier susceptible d'être placé contre une zone du corps de l'utilisateur.

17. Instrument selon la revendication 16, **caractérisé en ce que** le boîtier est susceptible d'être placé et fixé sur l'avant-bras de l'utilisateur.

18. Instrument selon la revendication 16, **caractérisé en ce que** le boîtier est réalisé en instrument portatif.

19. Instrument selon la revendication 18, **caractérisé en ce que** la trajectoire de balayage (6,7,8) se trouve sur le côté extérieur du boîtier et qu'elle est susceptible d'être détectée par un doigt (12) de l'utilisateur.

20. Instrument selon la revendication 19, **caractérisé par** un évidemment dans le boîtier dans lequel s'étend la trajectoire de balayage (6,7,8).

21. Instrument selon l'une quelconque des revendications 15-20, **caractérisé en ce que** le ou les organes d'actionnement (4) respectivement des moyens de commutation du domaine d'affichage sont également prévus dans le boîtier.

22. Instrument selon la revendications 21, **caractérisé en ce que** le ou les organes d'actionnement (4) respectivement sont susceptibles d'être actionnés par un ou plusieurs doigts de l'utilisateur respectivement.

23. Instrument selon la revendication 22, **caractérisé en ce que** le ou les organes d'actionnement (4) respectivement sont prévus dans un ou plusieurs évidements du boîtier respectivement.

24. Instrument selon l'une quelconque des revendications 1-23, **caractérisé en ce que** tout l'instrument est prévu dans un seul boîtier.

25. Instrument selon la revendication 1, **caractérisé par**
(a) deux ou plusieurs systèmes de mesure de la distance sans contact (13,14,15,16,17,18) qui génèrent à chaque fois une grandeur de commande dépendant de la distance entre l'instrument et à chaque fois un objet détecté par le système de mesure de la distance respectif, et
(b) un ou plusieurs dispositifs d'affichage d'après l'une quelconque des revendications 1-24.

26. Instrument selon l'une quelconque des revendications 1-25, **caractérisé par** deux ou plusieurs affichages tactiles (9,10,11) qui se déplacent le long de trajectoires de balayage (6,7,8) s'étendant l'une à côté de l'autre.

27. Instrument selon l'une quelconque des revendications 1-26, **caractérisé en ce que** l'instrument est commandé par des piles et que des moyens destinés à générer un signal d'avertissement en cas de chute de tension des piles sont prévus.

28. Instrument selon l'une quelconque des revendications 1-27, **caractérisé par** une canne (5) susceptible de se déplier à la façon d'un télescope.
